**Europäisches Patentamt**

**European Patent Office**

**Office européen des brevets**

(11) Veröffentlichungsnummer : **0 045 428**
**B1**

(19)

(12) **EUROPÄISCHE PATENTSCHRIFT**

(45) Veröffentlichungstag der Patentschrift :
**28.12.83**

(51) Int. Cl.³ : **G 03 B 17/30**, G 03 B 17/26

(21) Anmeldenummer : **81105679.5**

(22) Anmeldetag : **20.07.81**

(54) **Aussenhaken- und Fangspule zum rotativen An- und Aufwickeln.**

(30) Priorität : **31.07.80 DE 3029022**

(43) Veröffentlichungstag der Anmeldung :
**10.02.82 Patentblatt 82/06**

(45) Bekanntmachung des Hinweises auf die Patenterteilung : **28.12.83 Patentblatt 83/52**

(84) Benannte Vertragsstaaten :
**BE CH DE FR GB IT LI**

(56) Entgegenhaltungen :
**DE-A- 2 444 106**
**DE-A- 2 745 981**
**US-A- 3 021 085**

(73) Patentinhaber : **AGFA-GEVAERT Aktiengesellschaft**
**D-5090 Leverkusen 1 (DE)**

(72) Erfinder : **Kluczynski, Achim**
**Im Eichholz 6**
**D-5063 Overath (DE)**
Erfinder : **Altmann, Erik**
**Düsterweg 38**
**D-4330 Mülheim/Ruhr (DE)**

Außenhaken- und Fangspule zum rotativen An- und Aufwickeln

Die Erfindung betrifft eine Außenhaken- und Fangspule zum rotativen An- und Aufwickeln eines federelastischen Bandmaterials, insbesondere eines Filmstreifens, mit einem zylindrischen Spulenkern, der mindestens einen Kerndurchbruch, an welchem Fangeinrichtungen und Aushaksicherungen für das zu befestigende Band angeformt sind, und vorzugsweise zwei Flanschenscheiben umfaßt, wobei das Band zum Einhaken in Haken der Außenhakenspule mit entsprechend geformten Löchern versehen ist.

Es ist eine große Zahl Spulenausführungsarten bekannt, die zum Aufwickeln verschiedenartiger Bandmaterialien dienen. Bei diesen Spulen ist das Befestigen zum Beispiel eines Filmbandes an den Spulen zum Aufwickeln auf die verschiedensten Arten gelöst, wie z. B. durch Umschlingen, Ankleben, Nieten, Klemmen oder Einhaken am oder in einem Schlitz im Spulenkern. Der Gegenstand der Erfindung befaßt sich mit Hakenspulen, in die das mit Löchern versehene Band eingehakt wird.

Für Kleinbildfilme sind Spulen bekannt, die z. B. als Doppelhakenspulen bezeichnet werden. Diese Spulen besitzen im Spulenkern einen Kerndurchbruch, in dem eingeformte Fanghaken und separate Leitflächen oder Haltekörper angebracht sind. Das mit einem Loch versehene Filmende wird in diesen Kerndurchbruch eingeschoben, wobei die Leitfläche zu beiden Seiten der Haken den Film um den Haken wölben, solange, bis das Loch im Film in den Haken einschnappt. Die Leitflächen verhindern nach dem Einschnappen des Loches in den Haken über die Filmsteifigkeit ein selbsttätiges Aushaken des Filmbandes aus der Spule.

Diese aus der Druckschrift BE-A 566 676 bekannte Spulenform hat den Nachteil, daß beim automatischen Einhakvorgang die Spule in eine bestimmte Position gebracht werden und hier solange verharren muß, bis der Einhakvorgang abgeschlossen ist. Dies kostet natürlich Zeit und steht damit einer noch wirtschaftlicheren Nutzung entgegen. Desweiteren ist an diesen Spulen nachteilig, daß sich nur relativ geringe Zugkräfte bei Filmbandmaterialien übertragen lassen, was in vielen Fällen zur Folge hat, daß der Film aus der Spule ausreißt und damit unbrauchbar wird.

Die US-Patentschrift 3 361 380 beschreibt eine Kombination Spule-Filmband, bei welcher in einem Spulenschlitz zwei Haken und im Filmband zwei Löcher zur Verbesserung der Haltekraft angebracht werden. Auch diese Spule eignet sich nur bedingt zum sicheren Befestigen des Filmes an der Spule und gestattet kein rotatives Anwickeln.

Die DE-A-2 444 106 beschreibt eine Spule mit einem Aussenhaken, der den Film in Rotation einhaken und über Leitflächen beidseitig des Hakens gegen Aushaken sichern soll.

Diese Spule zeigt ein unsicheres Einhaken und führt daher zu hohem Auschuß beim Einsatz in der Herstellung von Filmpatronen mit Spulen. Die als Aushaksicherung vorgesehenen Leitflächen vermeiden ein Aushaken des Films aus der Spule nur unzureichend. Die übertragbaren Zugkräfte sind ähnlich denjenigen normaler Hakenspulen und nicht zufriedenstellend.

Aus der DE-A-2 745 981 ist eine Außenhakenspule zum Aufwickeln bandförmiger Materialien bekannt, bei der in einem Durchbruch des Spulenkernes ein oder mehrere Fanghaken mit Gegenhaken und Haltekörperpaaren für das Einhaken eines mit eingestanzten Löchern versehenen Bandes bei rotierender Spule angeformt sind. Nach dem Einhakvorgang wird bei Änderung der Wickelrichtung ein Aushaken des bandförmigen Materials vermieden. Diese Spule erlaubt das Einfädeln zum Beispiel eines Filmstreifens in eine geschlossene Filmkassette durch das Filmmaul, wobei sich das Filmende in die rotierende Spule einhakt.

Diese Außenhakenspule hat den Nachteil, daß der Fanghaken das Filmband fängt und ruckartig beschleunigt. Die von der rotierenden Spule auf die in das Filmbandende eingestanzten Löcher ausgeübte Kraft ist sehr groß, so daß die Löcher leicht ausreißen können, insbesondere wenn der Einhakvorgang in einer Kassette ausgeführt wird und das Filmband durch das Kassettenmaul gebremst wird. Ein immer sicheres Einhaken ist nicht gewährleistet und ein Aushaken des Filmstreifens beim Drehen der Spule kann gelegentlich erfolgen. Die Spule benötigt aufgrund ihrer komplizierten Form ein Spritzwerkzeug mit mehreren Trennebenen und ist somit auch teurer in der Herstellung

Der Erfindung liegt die Aufgabe zugrunde eine Außenhaken- und Fangspule der eingangs genannten Art zu schaffen, mit der es auf einfache und preiswerte Weise möglich ist, einen kontinuierlich zugeführten, bandförmigen elastischen Materialstreifen sicher in einer rotierenden Spule zu fangen und einzuhaken, so daß nach dem Einhaken unabhängig von der Drehrichtung der Spule zwischen Spule und Materialstreifen eine gute Haltekraft und eine hohe Aushaksicherheit erhalten wird.

Ausgehend von einer Außenhakenspule der einleitend genannten Art ist die Erfindung dadurch gelöst, daß in dem Kerndurchbruch des Spulenkernes beidseitig in Spulenachsenrichtung gegeneinandergerichtet je ein flügelförmiger Fangkörper zum Fangen des Bandmaterials bei rotierender Spule angeformt ist, daß zwischen den Fangkörpern mindestens ein Haltehaken und ein Aushaksicherungsstift in dem Kerndurchbruch angeordnet sind und daß das Ende des zugehörigen Streifens mit einem hammerförmigen Anschnitt versehen ist, in welchen mindestens ein Halteloch und ein Aushaksicherungsloch eingestanzt sind.

Überraschenderweise erlaubt die Anordnung von je einem flügelartigen Fangkörper zum Fangen des Bandendes, welches hierzu mit einen hammerförmigen Anschnitt versehen ist, und die darauf erfolgende, durch die flügelartigen Fangkörper erzwungene Einrastung des Halteloches und des Aushaksicherungsloches in den Haltehaken und den Aushaksicherungsstift sowohl ein sicheres Fangen des Bandendes als auch ein sicheres Einhaken. Da das hammerförmige Bandende durch die Schlitze zwischen den flügelartigen Fangkörpern und der dazwischenliegenden Ebene des Spulenkernes nach dem Einrasten in den Haltehaken an einer Aufwölbung gehindert ist, wird ein Aushaken unmöglich, gleich in welcher Drehrichtung die Spule gedreht wird. Durch die Anordnung des Haltehakens und des Aushaksicherungsstiftes zwischen den Fangkörpern wird das Bandende gleichzeitig in zwei Löchern gehalten, so daß die Gefahr eines Reißens des Bandes bei großen Zugbeanspruchungen erheblich gemindert wird. Als vorteilhaft zeigt sich auch, daß nach dem Fangen des Bandendes die Außenhaken- und Fangspule weiter dreht und das Einhaken erst später erfolgt, wodurch die plötzliche Zugbeanspruchung beim Einhaken dadurch gemindert wird, daß sie über eine Kante des Kerndurchbruches erfolgt die einen Teil der Zugbeanspruchung aufnimmt.

Das Fangen des Bandendes kann ebenso sicher und schnell erfolgen, wenn das Bandende durch das Maul einer Kassette, in der die Außenhaken- und Fangspule rotiert, eingeführt wird.

Bei einer bevorzugten Ausführungsform sind statt des Haltehakens und des Aushaksicherungsstiftes zwei Haltehaken zwischen den Fangkörpern angeordnet und dementsprechend in den hammerförmigen Anschnitt zwei Haltelöcher für die Haltehaken eingestanzt.

Durch die Anordnung zweier Haltehaken wird die Haltekraft der Spule verbessert und die Haltelöcher im hammerförmigen Anschnitt sind gleich groß.

Eine vorteilhafte Ausführungsform zeichnet sich dadurch aus, daß in dem Spulenkern zwei gegenüberliegende Kerndurchbrühe mit Fangkörpern, Haltehaken und/oder Aushaksicherungsstifte vorgesehen sind, wobei die Haltehaken auf beiden Seiten des Spulenkernes um 180 °C verdreht angeordnet nach verschiedenen Seiten der Spule zeigen und die Aushaksicherungsstifte und die Haltehaken genau gegenüberliegend angeordnet sind.

Durch diese Ausführungsform wird einerseits Fang- und Einhakvorgang beschleunigt, da bereits bei einer Drehung der Spule um 180 °C ein Fang- und Einhakvorgang stattfindet und andererseits für die Spule weniger Material benötigt.

Die Haltehaken sind an der der Hakenspitze gegenüberliegenden Seite mit einer nach der Spulenachse zu verlaufenden Flächen hinterstellt. Es wird so erreicht, daß der Filmstreifen, wenn er gegen den Haken geschoben wird, sich nicht aufwölbt und aus dem Haken springen kann.

Ein sicheres Einhaken wird auch dadurch erreicht, daß die Haltehaken und die Aushaksicherungsstifte von der Spulenachse aus weiter nach außen ragen als die Oberkante des Schlitzes zwischen dem Fangkörper und dem Spulenkerndurchbruch und daß die Haltehaken und die Aushaksicherungsstifte nach den Flanschscheiben zu abgeschrägt sind.

Bei dem Fangen des Bandendes wölbt sich der Bandstreifen zunächst über die Haltehaken bzw. über Haltehaken und Aushaksicherungsstift solange, bis die Löcher im Bandende über diesen stehen. Aufgrund der Elastizität des Bandmaterials, welches bestrebt ist, flach zu liegen, springt das Bandende mit seinen Löchern dann in die Haken oder in den Haken und in den Stift. Die Abschrägung der Haken und Stifte erfolgt etwa mit dem Radius, in dem das Band zwischen den Schlitzen, die die Fangkörper mit der Kerndurchbruchebene bilden, kurz vor dem Einhaken gewölbt ist.

Weiterhin wurde gefunden, daß es zweckmäßig ist, um keine Abdrücke oder Durchdrücke auf dem Band zu erhalten, daß Fangkörper, Haltehaken und Aushaksicherungsstifte innerhalb des Spulenkernumfanges liegen und das Band beim Aufwickeln nur von den flanschennahen zylindrischen Teilen des Spulenkernes getragen wird.

Ein Ausführungsbeispiel ist in den Zeichnungen dargestellt und wird im folgenden näher beschrieben.

Es zeigt :

Figur 1   eine perspektivische Darstellung einer Außenhaken- und Fangspule mit zugehörigem Bandende,

Figur 2   eine Seitenansicht einer Außenhaken- und Fangspule mit beidseitiger Fang- und Halteeinrichtung,

Figur 3   einen radialen Schnitt längs der Linie A-A durch die Spule der Figur 2,

Figur 4   eine Seitenansicht einer Außenhaken- und Fangspule mit je zwei Haltehaken in beiden Kerndurchbrüchen,

Figur 5   einen radialen Schnitt durch die Haltehaken der Spule.

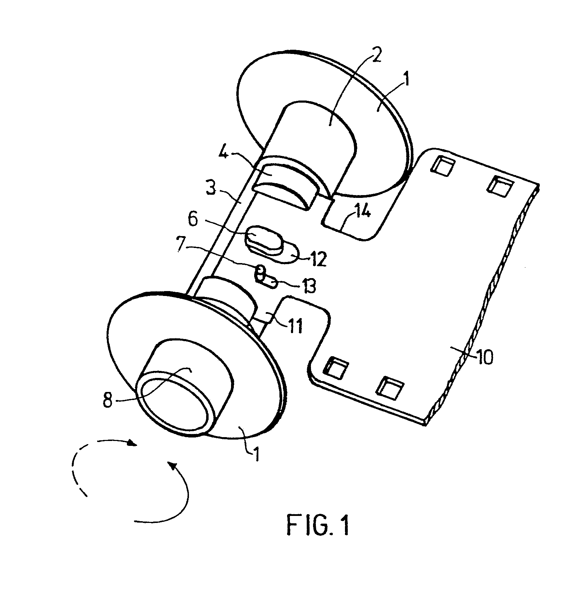

In Figur 1 ist eine Kleinbildspule für Kleinbildfilme als Anwendungsbeispiel für die Außenhaken- und Fangspule dargestellt. Die Spule besteht aus einem Spulenkern 2 an welchem beidseitig Flanschscheiben 1 angeordnet sind. An der einen Seite der Spule ist ein hohler zylindrischer Zapfen 8 angebracht und an der anderen Seite eine Bohrung 9 eingebracht (Figur 2). Der Spulenkern 2 besitzt mindestens einen Kerndurchbruch 3, an dem auf beiden Seiten flügelartige Fangkörper 4 angeordnet sind, die mit ihrer Unterseite mit dem verbleibendem Spulenkern 2 Fangschlitze 5 bilden. Zwischen den Fangkörpern 4 ist auf dem verbleibenden Spulenkern 2 ein Haltehaken 6 angeordnet.

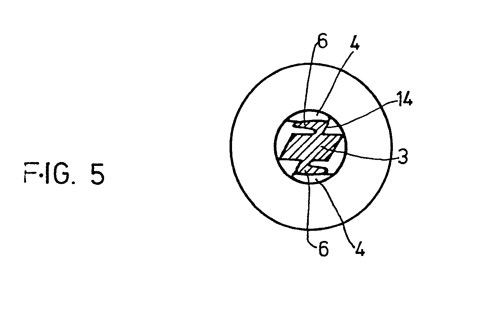

Der Haltehaken 6 ist in Figur 1 als Doppelhaken ausgebildet, er kann aber auch als einfachen Haltehaken (wie in Figur 2 und 5 dargestellt) ausgeführt werden. Als zusätzliche Aushaksicherung ist ein Aushaksicherungsstift 7 angeordnet, wodurch die Gefahr des Aushakens noch weiter erschwert wird.

In die Spule der Figur 1 ist ein Ende eines Filmstreifens 10 eingehakt. Das Ende des Filmstreifens 10 besitzt einen hammerförmigen Anschnitt 11 in dem ein Halteloch 12 und ein Aushaksicherungsloch 13 eingestanzt sind. Die Verjüngung 14 des Filmstreifens zwischen dem hammerförmigen Anschnitt 11 und dem Filmstreifen 10 ist schmaler als der Abstand der Fangkörper 4 und länger als die Breite der Fangkörper 4. Um die Verjüngung 14 des Filmstreifens 10 gut in den Kerndurchbruch 3 einlegen zu können, sind die nach innen zeigenden Kanten der Fangkörper 4 abgeschrägt (siehe Figur 2).

Der Fang- und Einhakvorgang läuft folgendermaßen ab : Die Spule rotiert in Pfeilrichtung, während der Filmstreifen 10 etwa tangential zum Spulenkern 2 zugeführt wird. Hierbei gleitet der hammerförmige Anschnitt zunächst über die Fangkörper 4.

Beim weiteren Vorschieben des Filmstreifens 10 gleitet die Verjüngung 14 zwischen die flügelartigen Fangkörper 4 und diese erfassen die Hinterkante des hammerförmigen Anschnittes 11 und ziehen diese in die Schlitze 5 zwischen den Fangkörpern 4 und dem Spulenkerndurchbruch 3. Beim Weiterdrehen der Spule gelangt der Haltehaken 6 und der Aushaksicherungsstift 7 zunächst unter die Verjüngung 14 und wölbt den elastischen Film nach außen über den Haltehaken 6 und den Aushaksicherungsstift 7. Beim Weiterdrehen der Spule gelangt das im hammerförmigen Anschnitt 11 befindliche Halteloch 12 und das Aushaksicherungsloch 13 über den Haltehaken 6 und den Stift 7. Da die Löcher größer ausgeführt sind als der Haltehaken bzw. der Stift und das elastische Filmmaterial bestrebt ist, eine Planlage einzunehmen, vollzieht sich der Einhakvorgang mit großer Geschwindigkeit. Die Spule hat sich während dieses Vorganges um mehr als 90 °C weitergedreht, so daß die Verjüngung 14 des Filmstreifens 10 bereits auf der filmbandseitigen Kante des Kerndurchbruches 3 aufliegt. Die erforderliche Kraft zur Beschleunigung des Filmstreifens nach dem Einhaken wird somit nicht nur von dem Haltehaken 6 und dem Stift 7 auf den Filmstreifen 10 übertragen, sondern auch durch die Reibung des Filmstreifens an der Kante des Kerndurchbruches.

Der hammerförmige Anschnitt 11 des Filmstreifens 10 liegt nach dem Einhakvorgang flach in den beidseitigen Fangschlitzen 5. Der Haltekörper 6 und der Aushaksicherungsstift 7 überragen die Unterkanten der Fangschlitze 5, so daß der Filmstreifen nicht mehr ausgehakt werden kann, auch nicht, wenn die Spule entgegen dem normalen Drehsinn in Uhrzeigerrichtung (gestrichelter Pfeil) gedreht wird. Ein Trennen von Film und Spule kann hierbei nur durch Abreißen des Filmes von der Spule erfolgen.

Figur 2 zeigt eine Seitenansicht der Außenhaken- und Fangspule mit zwei Kerndurchbrüchen 3. Die Kerndurchbrüche 3 liegen einander gegenüber. Die Spule nach dieser Ausführungsart hat den Vorteil, daß nur eine Spulendrehung um 180 °C zu erfolgen braucht, um den Einhakvorgang durchzuführen. Bei aus Kunststoff gespritzten Spulen besteht der weitere Vorteil der Materialersparnis und der Vorteil, daß die Spule mit einem sehr einfachen Spritzwerkzeug hergestellt werden kann, welches nur einen Trennschnitt zur Entformung der Spule benötigt.

Die Haltehaken 6 sind in ihren Hakrichtung um 180 °C gedreht angeordnet, während die Aushaksicherungsstifte 7 symmetrisch und gegenüberliegend angebracht sind.

Die Haltehaken 6 und die Aushaksicherungsstifte 7 können eine Abschrägung in Richtung auf die Spulenflansche 1 zu haben, die der Aufwölbung des Filmes vor dem Einspringen des Halteloches 11 und des Aushaksicherungsloches 13 entspricht und das Darübergleiten des Filmes erleichtert.

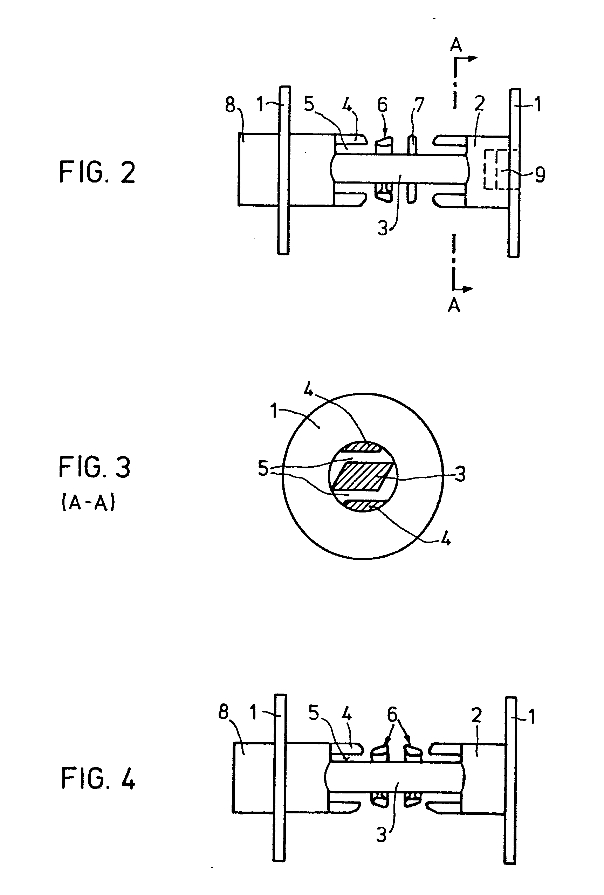

Figur 3 zeigt einen Schnitt A-A durch die Spule der Figur 2, aus welchem die Lage der Fangkörper 4, die Fangschlitze 5 und die Form des Spulenkernes 2 im Bereich des Spulenkerndurchbruches zu sehen ist.

In Figur 4 ist eine Außenhaken- und Fangspule gezeigt, die anstatt eines Haltehakens 6 und eines Aushaksicherungsstiftes 7 zwei Haltehaken 6 in jedem Kerndurchbruch 3 besitzt. Diese Anordnung ist besonders geeignet, wenn hohe Haltekräfte zwischen Spule und Filmstreifen erforderlich sind. Durch die zwei Haltehaken wird die Zugkraft auf zwei gleichgroße Haltelöcher 12 verteilt und somit die Gefahr des Außreißens der Haltelöcher 12 verringert.

Figur 5 zeigt einen Schnitt durch die Spule in radialer Richtung im Bereich der gegenüberliegenden Haltehaken 6. Es ist die um 180 °C verdrehte Stellung der Haltehaken 6 gezeigt. Die Haltehaken sind an der der Hakenspitze gegenüberliegenden Seite mit einer nach der Spulenachse nach innen zu schräg verlaufenden Fläche 14 versehen.

Wird ein eingehakter Filmstreifen 10 gegen die Rückseite des Hakens geschoben oder die Spule dreht sich im Uhrzeigersinn gegen den Filmstreifen 10, so kann sich der Filmstreifen nicht aufwölben und über den Haltehaken 6 gleiten. Die Fläche 14 berhindert somit ein Aushaken.

Die Erfindung ist nicht auf das beschriebene Ausführungsbeispiel einer Filmspule für Kleinbildfilm und den zugehörigen Film beschränkt. Die Außenhaken- und Fangeinrichtung kann in jeden Spulenkern eingebracht werden und zum Anwickeln oder Befestigen eines jeglichen bandförmigen elastischen Materiales verwendet werden, zum Beispiel auch für Kino- und Schmalfilme, für Tonbänder oder andere Bänder. Wird eine wieder lösbare Befestigung einer Bandstreifens an einer Spule benötigt, so kann die Spule mit einer einfachen Vorrichtung versehen sein, die die Haltehaken 6 und die Aushaksicherungsstifte 7 in das innere des Spulenkernes 2 gegen eine Feder absenkt, bis die Verbindung gelöst ist (nicht dargestellt). Ein Zerstören des Bandabschnittes durch Abreißen ist dann nicht

erforderlich.

**Ansprüche**

1. Außenhaken- und Fangspule zum rotativen An- und Aufwickeln eines federelastischen Bandmaterials, insbesondere eines Filmstreifens, mit einem zylindrischen Spulenkern, der mindestens einen Kerndurchbruch, an welchem Fangeinrichtungen und Aushaksicherungen für das zu befestigende Band angeformt sind, und vorzugsweise zwei Flanschenscheiben umfaßt, wobei das Band zum Einhaken in Haken der Außenhakenspule mit entsprechend geformten Löchern versehen ist, dadurch gekennzeichnet, daß in dem Kerndurchbruch (3) des Spulenkernes (2) beidseitig in Spulenachsenrichtung gegeneinandergerichtet je ein flügelförmiger Fangkörper (4) zum Fangen des Bandmaterials (10) bei rotierender Spule angeformt ist, daß zwischen den Fangkörpern (4) mindestens ein Haltehaken (6) und ein Aushaksicherungsstift (7) in dem Kerndurchbruch (3) angeordnet sind und daß Ende des zugehörigen Streifens (10) mit einem hammerförmigen Anschnitt (11) versehen ist, in welchen mindestens ein Halteloch (12) und ein Aushaksicherungsloch (13) eingestanzt sind.

2. Außenhakenspule nach Anspruch 1, dadurch gekennzeichnet, daß statt des Haltehakens (6) und des Aushaksicherungsstiftes (7) zwei Haltehaken (6) zwischen den Fangkörpern (4) angeordnet sind und daß in den hammerförmigen Anschnitt (11) zwei Haltelöcher (12) für die Haltehaken (6) eingestanzt sind.

3. Außenhakenspule nach Anspruch 1 oder 2, dadurch gekennzeichnet, daß in dem Spulenkern (2) zwei gegenüberliegende Kerndurchbrüche (3) mit Fangkörpern (4), Haltehaken (6) und/oder Aushaksicherungsstifte (7) vorgesehen sind, wobei die Haltehaken (6) auf beiden Seiten des Spulenkernes (2) um 180 °C verdreht angeordnet nach verschiedenen Seiten der Spule zeigen und die Aushaksicherungsstifte (7) und die Haltehaken (6) genau gegenüberliegend angeordnet sind.

4. Außenhakenspule nach Anspruch 1 und 3 oder 2 und 3, dadurch gekennzeichnet, daß die Haltehaken (6) an der der Hakenspitze gegenüberliegenden Seite mit einer nach der Spulenachse zu verlaufenden Fläche (15) hinterstellt sind.

5. Außenhakenspule nach Anspruch 1 oder 2, dadurch gekennzeichnet, daß die Haltehaken (6) und die Aushaksicherungsstifte (7) von der Spulenachse aus weiter nach außen ragen als die Oberkante des Schlitzes (5) zwischen Fangkörper (4) und Spulenkerndurchbruch (3) und daß die Haltehaken (6) und die Aushaksicherungsstifte (7) nach den Flanschscheiben (1) zu abgeschrägt sind.

6. Außenhakenspule nach Anspruch 1, dadurch gekennzeichnet, daß die Fangkörper (4), die Haltehaken (6) und die Aushaksicherungsstifte (7) innerhalb des Umfanges des Spulenkernes (2) liegen und das Bandmaterial beim Aufwickeln nur von den flanschnahen zylindrischen Teilen des Spulenkernes (2) getragen ist.

**Claims**

1. An externally hooked storage spool for rotatively starting to wind and winding a resilient ribbon material, in particular a strip of film, having a cylindrical spool core which comprises at least one core opening, in which catches for and safety devices to prevent unhooking of the ribbon to be secured are moulded, and preferably two flanges, the ribbon being provided with appropriately shaped holes for hooking into the hooks of the externally hooked spool, characterised in that for catching the ribbon material (10) while the spool rotates two wing-shaped catching members (4) which are directed towards each other are moulded one on each side of the core opening (3) of the spool core (2) in the direction of the axis of the spool, in that at least one holding hook (6) and one pin (7) to prevent unhooking are positioned in the opening (3) in the core between the catching members (4), and in that the end of the strip (10) is provided with a hammer-shaped cut-out piece (11) in which are punched at least one holding hole (12) and one hole (13) to prevent unhooking.

2. An externally hooked spool according to Claim 1, characterised in that two holding hooks (6) are positioned between the catching members (4) instead of the holding hook (6) and the pin (7) to prevent unhooking and that two holding holes (12) for the holding hooks (6) are punched into the hammer-shaped cut-out piece (11).

3. An externally hooked spool according to Claim 1 or 2, characterised in that in the spool core (2) two core openings (3) are provided positioned opposite each other and having catching members (4), holding hooks (6) and/or pins (7) to prevent unhooking, which holding hooks (6) point towards different sides of the reel and are positioned rotated through 180° on both sides of the spool core (2) and the pins (7) to prevent unhooking and the holding hooks (6) are positioned so that they are exactly opposite each other.

4. An externally hooked spool according to Claims 1 and 3 or 2 and 3, characterised in that on the side opposite the point of the hook the holding hooks (6) are provided with a surface (15) extending towards the axis of the spool.

5. An externally hooked spool according to Claim 1 or 2, characterised in that the holding hooks (6) and the pins (7) to prevent unhooking project outwards from the spool axis beyond the top edge of the slit (5) between the catching member (4) and the opening (3) in the core of the spool and in that the holding hooks (6) and the pins (7) to prevent unhooking are slanted towards the flanges (1).

6. An externally hooked spool according to Claim 1, characterised in that the catching members (4), the holding hooks (6) and the pins (7) to prevent unhooking are located inside the circumference of the spool core (2) and during winding the ribbon material is carried only by the cylindrical parts of the core (2) of the spool near to the flanges.

## Revendications

1. Bobine réceptrice à crochet extérieur pour début d'enroulement et enroulement par rotation d'une matière en bande élastique faisant ressort, en particulier, d'une bande de pellicule, cette bobine comportant un noyau cylindrique comprenant au moins une découpe sur laquelle sont formés des dispositifs récepteurs et des sécurités contre le décrochage pour la bande à fixer, ainsi que, de préférence, deux flasques, des trous de forme correspondante étant pratiqués dans la bande pour l'accrocher dans la bobine à crochet extérieur, caractérisée en ce que, dans la découpe (3) du noyau (2) de la bobine, de chaque côté et dans le sens axial de celle-ci, est formé un corps récepteur en forme d'ailette (4) opposé à l'autre afin de recevoir la matière en bande (10) lors de la rotation de la bobine ; entre les corps récepteurs (4), au moins un crochet de retenue (6) et une broche de sécurité contre le décrochage (7) sont formés dans la découpe (3) du noyau, tandis que l'extrémité de la bande correspondante (10) comporte une amorce en T (11) dans laquelle sont découpés au moins un trou de retenue (12) et un trou de sécurité contre le décrochage (13).

2. Bobine à crochet extérieur suivant la revendication 1, caractérisée en ce que, au lieu du crochet de retenue (6) et de la broche de sécurité contre le décrochage (7), on prévoit au moins deux crochets de retenue (6) entre les corps récepteurs (4) tandis que, dans l'amorce en T (11), on pratique deux trous de retenue (12) pour les crochets de retenue (6).

3. Bobine à crochet extérieur suivant la revendication 1 ou 2, caractérisée en ce que, dans le noyau (2) de la bobine, on prévoit deux découpes (3) se faisant mutuellement face et comportant des corps récepteurs (4), des crochets de retenue (6) et/ou des broches de sécurité contre le décrochage (7), les crochets de retenue (6) étant décalés de 180° sur les deux côtés du noyau (2) de la bobine en étant orientés vers différents côtés de celle-ci, tandis que les broches de sécurité contre le décrochage (7) et les crochets de retenue (6) sont disposés exactement face à face.

4. Bobine à crochet extérieur suivant les revendications 1 et 3 ou 2 et 3, caractérisée en ce que, sur la face opposée à leur pointe, les crochets de retenue (6) comportent une surface (14) s'étendant vers l'axe de la bobine.

5. Bobine à crochet extérieur suivant la revendication 1 ou 2, caractérisée en ce que les crochets de retenue (6) et les broches de sécurité contre le décrochage (7) ressortent vers l'extérieur de l'axe de la bobine sur une plus grande distance que le bord supérieur de la fente (5) formée entre un corps récepteur (4) et la découpe (3) du noyau de la bobine, tandis que les crochets de retenue (6) et les broches de sécurité contre le décrochage (7) sont chanfreinés en direction des flasques (1).

6. Bobine à crochet extérieur suivant la revendication 1, caractérisée en ce que les corps récepteurs (4), les crochets de retenue (6) et les broches de sécurité contre le décrochage (7) sont situés à l'intérieur de la périphérie du noyau (2) de la bobine tandis que, lors de l'enroulement, la matière en bande n'est supportée que par les parties cylindriques du noyau (2) de la bobine qui sont proches des flasques.

FIG. 1

FIG. 2

A

8  1  5  4  6  7  2  1

9

3

A

FIG. 3

(A-A)

1

4

5

3

4

FIG. 4

8  1  5  4  6  2  1

3

F·IG. 5